# EUROPEAN PATENT SPECIFICATION

(11) **EP 3 406 144 B1**
(45) Date of publication and mention of the grant of the patent: **25.12.2019**
(21) Application number: 18173146.4
(22) Date of filing: 18.05.2018
(51) Int. Cl.: A23L 33/105, A23L 33/115

(54) **ORAL COMPOSITION AGAINST HYPERLIPIDEMIA AND TO CONTROL CARDIO-VASCOLAR RISK FACTORS**
ORALE ZUSAMMENSETZUNGEN GEGEN HYPERLIPIDÄMIE UND ZUR KONTROLLE KARDIOVASKULÄRER RISIKOFAKTOREN
COMPOSITION ORALE POUR L'HYPERLIPIDÉMIE ET RÉGULER LES FACTEURS DE RISQUE CARDIOVASCULAIRE

(30) Priority: 24.05.2017 IT 201700056408
(43) Date of publication of application: 28.11.2018
(73) Proprietor: Inpha Duemila S.r.l., 20122 Milano MI (IT)
(72) Inventor: Castelli, Simone, 23900 Lecco LC (IT); Samaritani, Giuseppe, 23900 Lecco LC (IT); Frungillo, Antonio, 23900 Lecco LC (IT)
(74) Representative: Perani & Partners S.p.A.

(56) References cited:
- CN-B- 103 830 407
- US-A1- 2003 044 474
- US-A1- 2012 177 631
- US-A1- 2013 115 202
- US-A1- 2016 120 882
- US-A1- 2016 235 822
- GIOVANNINI LUCA ET AL: "Role of nutraceutical SIRT1 modulators in AMPK and mTOR pathway: Evidence of a synergistic effect", NUTRITION, ELSEVIER INC, US, vol. 34, 3 October 2016 (2016-10-03), pages 82-96, XP029876046, ISSN: 0899-9007, DOI: 10.1016/J.NUT.2016.09.008

## Description

### FIELD OF THE INVENTION

The present invention relates to an oral composition, in particular for nutraceutical use, for hyperlipidaemia and cardio-vascular risk factors control.

### STATE OF THE ART

Hypercholesterolaemia has now been definitively identified as a determining factor of an increase in cardio-vascular risk. This evidence is the result of a long series of epidemiological studies that have clearly correlated cholesterolaemia (plasma cholesterol concentrations) and ischemic cardio-vascular events, with specific reference to myocardial infarction and relative cardio-vascular mortality, whose most common aetiology is represented by myocardial infarction and cerebral stroke. In particular, The Seven Countries Study (1999) is one of the most famous and authoritative of these epidemiological investigations.

In this study, 12,770 men aged between 40 and 59 were enrolled in seven countries: the Netherlands, Finland, Greece, Yugoslavia, Italy, Japan and the USA and monitored for 25 years. Finland was the nation with the highest mortality from ischemic heart disease as opposed to Japan, which showed the lowest. The two main risk factors that emerged from the study were arterial hypertension and hypercholesterolaemia, in turn closely related to the intake of saturated fats and cholesterol through diet.

Moreover, a study published in 1975 (Ni-Hon-San Study) showed that the incidence of ischemic heart disease in 12,000 men of Japanese origin divided into two groups was the half in the group of subjects residing in Japan if compared to the one made up of subjects living in Hawaii and California: these data indicate the importance of environmental factors in the development of ischemic heart disease, but also the unequivocal role of genetic imprinting.

Longitudinal studies have shown that the risk of death due to ischemic heart disease is strictly proportional to the levels of cholesterolaemia: the higher the plasma cholesterol concentrations, the higher the cardio-vascular mortality. This correlation indicates that with increasing cholesterolaemia the mortality from coronary heart disease increases more rapidly, so that an increase in plasma cholesterolaemia equal to one percentage point corresponds to an increase of almost two percentage points of mortality: if compared to 200 mg/dl of cholesterolaemia, the mortality rate doubled to 250 mg/dl and quadrupled to 300 mg/dl.

A further important finding clearly emerged from the conducted studies indicates that the various risk factors examined (mainly hypertension, smoking, diabetes, obesity, familiarity with ischemic heart disease and low HDL levels) create an enhancement synergy, whereby several risk factors associated to a single individual determine an increase in the probability of death due to cardio-vascular causes.

In conclusion, epidemiological studies have shown with certainty that total cholesterolaemia and, above all, LDL values and LDL/HDL ratio are important risk factors for ischemic cardio-vascular diseases. However, epidemiological studies only allow formulating probable hypotheses but are not able to demonstrate a cause-effect relationship, in this case between cholesterolaemia and cardio-vascular diseases. Experimental studies (albeit with experimental limitations) and clinical studies support the causal role of cholesterol in cardio-vascular disease. Experimental studies have ascertained the importance of LDL in the pathogenesis of atherosclerosis, while clinical studies have shown that the reduction of cholesterolaemia actually coincides with a reduction in ischemic cardio-vascular events.

The use of nutraceuticals capable of restoring plasma concentrations of plasma cholesterol in subjects affected by mild to moderate cardio-vascular risk, but who are not yet candidates for drug therapy, is increasingly consolidated, even in clinical practice. In particular, substances such as fermented red rice titrated in Monacolin K have shown clinically proven efficacy in reducing LDL cholesterol in hypercholesterolemic subjects [1, 2, 3]. Monacolin K is a substance with a statin-like structure that acts by modulating the endogenous synthesis of LDL cholesterol by inhibiting the enzyme HMG-Co-A reductase, a key step for the synthesis of the mevalonate precursor [4]. In the light of the well-established pharmacodynamic mechanism and of the equally solid clinical evidence confirming its clinical efficacy, the fermented red rice extracts titrated in Monacolin are now a certainty in the nutraceutical adjuvant treatment of patients with mild to moderate cardio-vascular risk, who are not yet candidates for drug therapy with statins and other hypocholesterolemic drugs such as fibrates, synthetic statins and ezetimibe. Alongside this nutraceutical therapy, there are substances of equally proven efficacy and safety of use, even for long periods, such as Berberine, extracted from Berberis Aristata, which has shown efficacy in the control of mild to moderate hyperglycaemia with specific reference to the increase of glucose tolerance and to the reduction of plasma LDL [5, 6]. The efficacy of Berberine, considered one of the highest potential substances in the nutraceutical treatment of patients with hypercholesterolaemia, hyperglycaemia and increased cardio-vascular risk [7, 8, 9], is however vitiated by a poor oral bioavailability. The main phenomenon underlying this evidence is the action of the P-gP enteric pump (Multi Drug Resistance Glycoprotein), which works by excreting Berberine from the enterocyte with an ATP dependent mechanism [10, 11, 12]. Also substances such as Resveratrol, stilbenic polyphenol extracted from the root of Poligonum Cuspidatum and from the peel and seeds of Vitis Vinifera, have demonstrated a vascular-protective, lipid-lowering activity and a capability of reducing the cardio-vascular risk by reducing the oxidation of LDL close to the intima of the arteries [13, 14]. Also in the case of Resveratrol, a reduced bioavailability due to oral intake, determined by a wide enterohepatic biotransformation and in particular in the form of glucuronides, affects its effectiveness and strongly limits its applications in preventive medicine [15, 16, 17].

It is also known that Piperine from black pepper inhibits the enzyme UDP-glucuronyl transferase. This is a main biochemical step that controls the conjugation with glucuronic acid in the intestine and in the liver microsomes. [18].

Quercetin is a flavonoid extracted from various citrus plants, from Allium Cepa and from Dimorphandra Mollis, which is known for its vasoactive, antihistamine and modulatory properties of peripheral resistance. In particular, in the reduction of plasma lipids and of cardio-vascular risk, Quercetin has a particular nutraceutical value, consolidating the rationale of the product in the restoration of pressure physiology in overweight subjects and with high basal systolic pressure, as well as in the restoration of arterial physiology during atherosclerosis and associated inflammation. The action mechanism with which Quercetin exerts its anti-atherosclerotic action involves the inhibition of LDL oxidation and the consequent arterial endothelial damage through a mechanism of activation of SIRT-1 and of modulation of endothelial nitric oxide synthesis [19]. From a clinical point of view, several works published in double-blind vs. placebo, randomized and cross-over, in indexed impacted journals, have clearly highlighted how the Quercetin extracted from garlic peel is able to modulate the endothelial biochemistry restoring normal pressure values in hypertensive and overweight subjects [20], thus confirming the aforesaid cardio-protective effect. Furthermore, a randomized, placebo and cross-over study published in the British Journal of Nutrition confirmed the efficacy of Quercetin administered to overweight patients with high systolic blood pressure and elevated cardio-vascular risk in significantly reducing systolic blood pressure and the blood profile of LDL, thus confirming the aforementioned pharmacological mechanism [21]. Finally, a further randomized, double-blind and placebo-controlled clinical trial further confirmed the cardio-protective role of Quercetin in association with the catechinic component of cocoa in cardio-vascular protection [22].

The analysis of this solid and convincing scientific and clinical literature clearly shows the fundamental role of Quercetin in cardiological protection, especially in patients at medium-high cardio-vascular risk, hypertensive and with a high concentration of LDL. However, quercetin has poor bioavailability. For this purpose, it seems that the intake of Quercetin along with medium chain triglycerides is better and more uniformly assimilated by the intestine [23, 24, 25]. It is also known that the sugar cane policosanols and the chromium salts respectively act by further reducing the absorption of cholesterol with the diet and normalizing plasma glucose levels Further, GIOVANNINI LUCA ET AL: "Role of nutraceutical SIRT1 modulators in AMPK and mTOR pathway: Evidence of a synergistic effect", NUTRITION, ELSEVIER INC, US, vol. 34, 3 October 2016 (2016-10-03), pages 82-96, ISSN: 0899-9007, DOI: 10.1016/J.NUT.2016.09.008 describes the synergistic effect of berberin and quercetin as modulators of the expression Sirt-1 inhibiting the cholesterol-genesis and lipo-genesis eliciting a protective effect preventing heart ischemia. US 2013/115202 , CN 103 830 407 B and) US 2016/235822 A1 describe berberin and quercetin with oils (diglycerides) in capsules for protecting from cardiovascular risk.

### DESCRIPTION OF THE INVENTION

The invention is strictly defined by the claims. The Applicant has now found that the association of Berberine chloride and Quercetin, in addition to representing an effective nutraceutical association for the reduction of cardio-vascular risk for the above mentioned reasons, is also able to significantly improve the bioavailability of Berberine, thanks to the fact that Quercetin is a P-gP pump inhibitor [26, 27]. Moreover, the synergistic action in cardio-vascular protection exerted by Quercetin is more effective in the presence of mono/di or triglycerides of fatty acids that increase its bioavailability, encouraging enteric absorption.

Therefore, a further object of the present invention are preferably nutraceutical oral compositions comprising the aforementioned association of Berberine chloride, Quercetin and fatty acid triglycerides together with Monascus Purpureus (fermented red rice) titrated in Monacolin K, trans-Resveratrol and Piperine from black pepper in combination with suitable excipients and/or diluents.

The Applicant has in fact found that the aforementioned active principles contained in the compositions according to the present invention, such as Berberine and Quercetin, but also trans-Resveratrol and Piperine from black pepper, besides having similar therapeutic activities and therefore being much more effective if associated with each other, mutually interfere with each other increasing the overall bioavailability of individual substances, thus allowing a considerable reduction in the dosages of the aforementioned individual components.

Consequently, the compositions for nutraceutical use according to the present invention will contain the aforementioned principles in decidedly low quantities.

For the purposes of the present invention, nutraceutical compositions or nutraceutical use mean "food, or parts of food, which provide medical or health services, including the prevention and treatment of a specific disease".

The invention is defined by the claims. Preferably, the aforementioned compositions will contain:
- Red fermented rice titrated in Monacolin K containing said active ingredient in an amount varying between 2 and 10 mg per dosage unit;
- Berberis Aristata titrated in Berberine chloride containing a quantity of Berberine chloride varying between 50 and 200 mg per dosage unit;
- Quercetin extracted from Dimorphandra Mollis, Allium Cepa or other species containing Quercetin as such or dihydrate, in an amount ranging from 50 to 250 mg per dosage unit;
- trans-Resveratrol extracted from Poligonum Cuspidatum or Vitis Vinifera in an amount varying between 10 and 50 mg per dosage unit;
- Piperine from black pepper in an amount varying between 2 and 10 mg expressed as total Piperine per dosage unit.

The enteric absorption not only of Quercetin, but also of the other active substances, is favoured by the fact that such nutraceutical oral compositions are preferably gastroresistant formulations, such as tablets or capsules.

According to an aspect of the invention, the nutraceutical compositions of the present invention will also contain polycosanols, preferably from sugar cane and chromium, preferably in the form of a picolinate salt, and relative mixtures of said components. Preferably, the polycosanols are present in the oral compositions according to the present invention in variable amounts ranging from 10 to 50 mg per dosage unit, whereas the chromium expressed as the total chromium will preferably be present in amounts ranging from 10 to 50 µg.

The compositions according to the present invention are able to favour the reduction of plasma cholesterol levels, to restore the physiology of glucose metabolism and to reduce the general cardio-vascular risk in patients with mild to moderate risk;

The following examples of formulations according to the present invention are reported hereinafter for illustrative purposes.

### Example 1 - gastroresistant tablets

| | |
|---|---|
| Berberis Aristata | 54.3 mg (equivalent to 50 mg Berberine) |
| (Berberine chloride tit. 92%) | |
| Poligonum Cuspidatum d.e. | 20.4 mg (equivalent to 20 mg of t-Resverat) |
| (t-Resveratrol tit. 98%) | |
| Dimorphandra Mollis | 102 mg (equivalent to 100 mg of Quercetin) |
| (Quercetin tit. 98%) | |
| Monascus Purpureus d.e. | 100 mg (equal to 3 mg of Monacolin K) |
| (Monacolin K tit. 3%) | |
| Black pepper | 5.26 mg (equivalent to 5 mg of Piperine) |
| (Piperine tit. 95%) | |
| Mono and diglycerides of fatty a cids | 50.0 mg |
| Gastroresistant excipients | |
| (Shellac) | q.s. |
| Tablet excipients | q.s. to 1250 mg |

### Example 2 - gastroresistant tablets

| | |
|---|---|
| Berberis Aristata | 54.3 mg (equivalent to 50 mg Berberine) |
| (Berberine chloride tit. 92%) | |
| Poligonum Cuspidatum d.e. | 20.4 mg (equivalent to 20 mg of t-Resverat) |
| (t-Resveratrol tit. 98%) | |
| Dimorphandra Mollis | 102 mg (equivalent to 100 mg of Quercetin) |
| (Quercetin tit. 98%) | |
| Monascus Purpureus d.e. | 100 mg (equal to 3 mg of Monacolin K) |
| (Monacolin K tit. 3%) | |
| Policosanols from sugar cane | 12.0 mg |
| Chromium picolinate | 0.416 mg (equivalent to 50 µg of chromium) |
| Black pepper | 5.26 mg (equivalent to 5 mg of piperine) |
| (Piperine tit. 95%) | |
| Mono and diglycerides of fatty acids | 50.0 mg |
| Gastroresistant excipients | |
| (Shellac) | q.s. |
| Tablet excipients | q.s. to 1250 mg |

### Bibliography

1. Yang CW, Mousa SA. The effect of red yeast rice (Monascus Purpureus) in dyslipidemia and other disorders. Complement Ther Med. 2012 Dec; 20(6):466-74.
2. Burke FM. Red yeast rice for the treatment of dyslipidemia. Curr Atheroscler Rep. 2015 Apr; 17(4):495.
3. Liu J. Chinese red yeast rice (Monascus purpureus) for primary hyperlipidemia: a meta-analysis of randomized controlled trials. Chin Med. 2006 Nov 23; 1:4;
4. Davidson MH. A multicenter, randomized, double-blind clinical trial comparing the low-density lipoprotein cholesterol-lowering ability of lovastatin 10, 20, and 40 mg/d with fluvastatin 20 and 40 mg/d. Clin Ther. 2003 Nov; 25(11):2738-53.
5. Pisciotta L, Bellocchio A, Bertolini S. Nutraceutical pill containing berberine versus ezetimibe on plasma lipid pattern in hypercholesterolemic subjects and its additive effect in patients with familial hypercholesterolaemia on stable cholesterol-lowering treatment. Lipids Health Dis. 2012 Sep 22; 11:123;
6. Zhang H et al. Berberine lowers blood glucose in type 2 diabetes mellitus patients through increasing insulin receptor expression. Metabolism: Clinical and Experimental (September 2009).59 (2): 285-92;
7. Zhang Y et al. Treatment of type 2 diabetes and dyslipidemia with the natural plant alkaloid berberine. The Journal of Clinical Endocrinology and Metabolism (July 2008) 93 (7): 2559-65;
8. Pérez-Rubio KG et al. Effect of berberine administration on metabolic syndrome, insulin sensitivity, and insulin secretion. Metab Syndr Relat Disord. 2013 Oct; 11(5):366-9;
9. Yin J, Xing H, Ye J. Efficacy of berberine in patients with type 2 diabetes mellitus Metabolism: Clinical and Experimental (May 2008) 57 (5): 712-7;
10. Maeng HJ et al. P-glycoprotein-mediated transport of berberine across Caco-2 cell monolayers. J Pharm Sci. 2002 Dec; 91(12):2614-21;
11. Pan GY, et al. The involvement of P-glycoprotein in berberine absorption. Pharmacol Toxicol. 2002 Oct; 91(4):193-7;
12. Liu CS. Research progress on berberine with a special focus on its oral bioavailability. Fitoterapia. 2016 Mar; 109:274-82;
13. Tomé-Carneiro J. Consumption of a grape extract supplement containing resveratrol decreases oxidized LDL and ApoB in patients undergoing primary prevention of cardio-vascular disease: a triple-blind, 6-month follow-up, placebo-controlled, randomized trial. Mol Nutr Food Res. 2012 May; 56(5):810-21;
14. Zern TL, Wood RJ, Greene C, West KL, Liu Y, Aggarwal D, Shachter NS, Fernandez ML. Grape polyphenols exert a cardioprotective effect in pre- and postmenopausal women by lowering plasma lipids and reducing oxidative stress. J Nutr. 2005 Aug; 135(8):1911-7;
15. Thomas Walle, et al. High absorption but very low bioavailability of oral resveratrol in humans. Drug Metab Dispos. 2004 Dec; 32(12):1377-82. Epub 2004 Aug 27;
16. Wenzel E, Somoza V. Metabolism and bioavailability of trans-resveratrol. Mol Nutr Food Res. 2005 May; 49(5):472-81;
17. Walle T. Bioavailability of resveratrol. Ann N Y Acad Sci.2011 Jan; 1215:9-15;
18. Johnson JJ. Enhancing the bioavailability of resveratrol by combining it with piperine. Mol Nutr Food Res. 2011 Aug; 55(8):1169-76;
19. Hung CH. Quercetin is a potent anti-atherosclerotic compound by activation of SIRT1 signalling under oxLDL stimulation. Mol Nutr Food Res. 2015 Oct;59(10):1905-17;
20. Verena Brüll. Effects of a quercetin-rich onion skin extract on 24 h ambulatory blood pressure and endothelial function in overweight-to-obese patients with (pre-) hypertension: a randomised double-blinded placebo-controlled cross-over trial. British Journal of Nutrition (2015), 114, 1263-1277;
21. Egert S. Quercetin reduces systolic blood pressure and plasma oxidised low-density lipoprotein concentrations in overweight subjects with a high-cardio-vascular disease risk phenotype: a double-blinded, placebo-controlled cross-over study. Br J Nutr. 2009 Oct; 102 (7):1065-74;
22. James I Dower. Supplementation of the Pure Flavonoids Epicatechin and Quercetin Affects Some Biomarkers of Endothelial Dysfunction and Inflammation in (Pre) Hypertensive Adults: A Randomized Double-Blind, Placebo-Controlled, Cross-over Trial. J Nutr. 2015 Jul; 145(7):1459-63.
23. Lesser S, Cermak R, Wolffram S. The fatty acid pattern of dietary fat influences the oral bioavailability of the flavonol quercetin in pigs. Br J Nutr. 2006 Dec; 96(6):1047-52;
24. Graefe EU. Pharmacokinetics and bioavailability of the flavonol quercetin in humans. Int J Clin Pharmacol Ther. 1999 May; 37(5):219-33;
25. Lesser S. The fatty acid pattern of dietary fat influences the oral bioavailability of the flavonol quercetin in pigs. Br J Nutr. 2006 Dec; 96(6): 1047-52;
26. Tripta Bansal et al. Emerging Significance of Flavonoids as P-Glycoprotein Inhibitors in Cancer Chemotherapy. J Pharm Pharmaceut Sci (www. cspsCanada.org) 12 (1): 46 - 78, 2009;
27. Sylwia Borska et al. Quercetin as a Potential Modulator of P-Glycoprotein. Molecules 2010, 15, 857-870.

## Claims

1. Composition in oral form comprising Berberine chloride, Quercetin and mono/di and/or triglycerides of fatty acids, fermented Monascus Purpureus titrated in Monacolin K, trans-Resveratrol and Piperine from black pepper in combination with suitable excipients and/or diluents.

2. Composition according to claim 1, in the form of gastroresistant tablets or capsules.

3. Composition according to any one of claims 1 or 2 containing:
- fermented red rice titrated in Monacolin K containing said active ingredient in an amount ranging from 2 to 10 mg per dosage unit;
- Berberis Aristata titrated in Berberine chloride containing an amount of Berberine chloride ranging from 50 to 200 mg per dosage unit;
- Quercetin extracted from Dimorphandra Mollis, Allium Cepa or other species containing Quercetin as such or dihydrate, in amounts ranging from 50 to 250 mg per dosage unit;
- trans-Resveratrol extracted from Poligonum Cuspidatum or Vitis Vinifera in amounts ranging from 10 to 50 mg per dosage unit;
- Piperine from black pepper in amounts ranging from 2 to 10 mg expressed as total Piperine per dosage unit.

4. Composition according to any one of claims 1-3, containing polycosanols, preferably from sugar cane, and chromium, preferably in the form of picolinate salt, and relative mixtures of said components.

5. Composition according to claim 4, wherein said polycosanols are present in amounts ranging from 10 to 50 mg per dosage unit, while the chromium expressed as total chromium will preferably be present in amounts ranging from 10 to 50 µg.

6. Compositions according to any one of claims 1-5 for use in the control of hyperlipidaemia and cardio-vascular risk factors.

7. Oral compositions according to anyone of claims 1-5 for use as nutraceuticals.

8. Composition for use according to any one of claims 6 or 7 for use in reducing cholesterol plasma levels, in restoring the physiology of glucose metabolism and in reducing the general cardio-vascular risk in patients with mild to moderate cardio-vascular risk.

## Patentansprüche

1. Zusammensetzung in oraler Form, umfassend Berberinchlorid, Quercetin und Mono-/Di- und/oder Triglyceride von Fettsäuren, in Monacolin K titrierten, fermentierten Monascus Purpureus, trans-Resveratrol und Piperin aus schwarzem Pfeffer in Kombination mit geeigneten Hilfsstoffen und/oder Verdünnungsmitteln.

2. Zusammensetzung nach Anspruch 1 in Form von magensaftresistenten Tabletten oder Kapseln.

3. Zusammensetzung nach einem der Ansprüche 1 oder 2, enthaltend:
- in Monacolin K titrierten, fermentierter roter Reis, der den Wirkstoff in einer Menge im Bereich von 2 bis 10 mg pro Dosierungseinheit enthält;
- in Berberinchlorid titrierten Berberis Aristata, mit einem Gehalt an Berberinchlorid von 50 bis 200 mg pro Dosierungseinheit;
- Quercetin, extrahiert aus Dimorphandra Mollis, Allium Cepa oder anderen Arten, die Quercetin als solches oder als Dihydrat enthalten, in Mengen von 50 bis 250 mg pro Dosierungseinheit;
- trans-Resveratrol, extrahiert aus Poligonum Cuspidatum oder Vitis Vinifera in Mengen von 10 bis 50 mg pro Dosierungseinheit;
- Piperin aus schwarzem Pfeffer in Mengen von 2 bis 10 mg, ausgedrückt als Gesamtpiperin pro Dosierungseinheit.

4. Zusammensetzung nach einem der Ansprüche 1-3, enthaltend Polycosanole, vorzugsweise aus Zuckerrohr, und Chrom, vorzugsweise in Form von Picolinatsalz, und relative Gemische der genannten Komponenten.

5. Zusammensetzung nach Anspruch 4, worin die Polycosanole in Mengen im Bereich von 10 bis 50 mg pro Dosierungseinheit vorliegen, während das als Gesamtchrom ausgedrückte Chrom vorzugsweise in Mengen im Bereich von 10 bis 50 µg vorliegt.

6. Zusammensetzungen nach einem der Ansprüche 1-5 zur Verwendung bei der Kontrolle von Hyperlipidämie und kardiovaskulären Risikofaktoren.

7. Orale Zusammensetzungen nach einem der Ansprüche 1 bis 5 zur Verwendung als Nutrazeutika.

8. Zusammensetzung zur Verwendung nach einem der Ansprüche 6 oder 7 zur Verringerung des Cholesterinplasmaspiegels, zur Wiederherstellung der Physiologie des Glucosestoffwechsels und zur Verringerung des allgemeinen kardiovaskulären Risikos bei Patienten mit leichtem bis mäßigem kardiovaskulärem Risiko.

## Revendications

1. Composition sous forme orale comprenant du chlorure de berbérine, de la quercétine et des mono/di et/ou triglycérides d'acides gras fermentés, Monascus Purpureus titré en Monacoline K, trans-resvératrol et pipérine de poivre noir en association avec des excipients et/ou des diluants appropriés.

2. Composition selon la revendication 1, sous forme de comprimés ou de capsules gastro-résistants.

3. Composition selon l'une quelconque des revendications 1 ou 2 contenant :
- du riz rouge fermenté titré dans de la Monacoline K contenant ledit principe actif en une quantité allant de 2 à 10 mg par unité de dosage ;
- Berberis Aristata titré en chlorure de berbérine contenant une quantité de chlorure de berbérine comprise entre 50 et 200 mg par unité de dosage ;
- de la quercétine extraite de Dimorphandra Mollis, d'Allium Cepa ou d'autres espèces contenant de la quercétine en tant que telle ou dihydrate, en quantités allant de 50 à 250 mg par unité de dosage ;
- trans-resvératrol extrait de Poligonum Cuspidatum ou de Vitis Vinifera en quantités allant de 10 à 50 mg par unité de dosage ;
- de la pipérine de poivre noir en quantités allant de 2 à 10 mg exprimées en pipérine totale par unité de dosage.

4. Composition selon l'une quelconque des revendications 1 à 3, contenant des polycosanols, de préférence de la canne à sucre, et du chrome, de préférence sous la forme de sel de picolinate, et des mélanges relatifs desdits composants.

5. Composition selon la revendication 4, dans laquelle lesdits polycosanols sont présents en des quantités allant de 10 à 50 mg par unité de dosage, tandis que le chrome exprimé en chrome total sera de préférence présent en des quantités allant de 10 à 50 µg.

6. Compositions selon l'une quelconque des revendications 1 à 5, destinées à être utilisées dans le contrôle de l'hyperlipidémie et des facteurs de risque cardio-vasculaires.

7. Compositions orales selon l'une quelconque des revendications 1 à 5, destinées à être utilisées comme nutraceutiques.

8. Composition à utiliser selon l'une quelconque des revendications 6 ou 7, à utiliser dans la réduction des taux plasmatiques de cholestérol, dans la restauration de la physiologie du métabolisme du glucose et dans la réduction du risque cardiovasculaire général chez les patients présentant un risque cardiovasculaire léger à modéré.
